# EUROPEAN PATENT APPLICATION

(11) **EP 4 450 202 A1**
(43) Date of publication of application: **23.10.2024**
(21) Application number: 24171488.0
(22) Date of filing: 22.04.2024
(51) Int. Cl.: B23K 9/095, B23K 9/12, B23K 9/32, B23K 31/00, B23K 31/12

(54) **WELDING SYSTEM**

(30) Priority: 20.04.2023 KR 20230052297; 06.03.2024 KR 20240032088
(71) Applicant: Otos Wing Co., Ltd., Seoul 08521 (KR)
(72) Inventor: HUH, Moon Young, 08521 Seoul (KR); HUH, Sung Won, 06084 Seoul (KR)
(74) Representative: Meissner Bolte Partnerschaft mbB

(57) **Abstract**

Provided is a welding system (1). The welding system includes a welding information providing device (100) for generating and displaying information related to welding and a welding torch (200) for generating an electric arc on a welding base material, wherein the welding information providing device (100) may include a first projection unit (121) for projecting a marker (121-1) on the welding base material and a first camera unit (122) for photographing the marker (121-1) projected on the welding base material.

## Description

### BACKGROUND

### 1. Field

The present disclosure relates to a welding system.

### 2. Description of the Related Art

Welding technology has become a core process in the manufacturing and construction fields. Welding is an essential task for connecting metal parts and assembling structures, and plays a very important role in satisfying various functions such as safety, durability, and sealability.

In general, welding relies on the experience and know-how of a skilled welder, and the exact location of the welding area and setting the correct welding conditions are considered key factors. However, such welding has limitations in ensuring consistency and accuracy of welding operation. There are Issues such as manpower costs, safety issues, and human error during welding operation.

The background technology is technical information that the inventor of the present application possessed for deriving this disclosure or obtained in the process of deriving this disclosure, and cannot necessarily be said to be known technology disclosed to the general public before filing the application for this disclosure.

### SUMMARY

An objective of the present disclosure is to improve welding accuracy and welding quality by tracking the exact location of a welding portion and adjusting the welding operation accordingly.

An objective of the present disclosure is to improve the safety of the welding operation environment and ensure the safety of welding operators.

An objective of the present disclosure is to improve the abilities of future welding operators by providing welding education content to educate welding operators.

An objective of the present disclosure is to quickly and accurately process the welding operation through welding automation based on accurate location tracking of the welding portion.

The objectives to be addressed by the present disclosure are not limited to those described above, and other objectives and advantages of the present disclosure that are not described can be understood through the following description and can be understood more clearly through embodiments of the present disclosure. In addition, it will be appreciated that the objectives and advantages to be solved by the present disclosure can be realized by the means and combinations thereof indicated in the claims.

Additional aspects will be set forth in part in the description which follows and, in part, will be apparent from the description, or may be learned by practice of the presented embodiments of the disclosure.

A welding system according to an embodiment of the present disclosure includes a welding information providing device for generating and displaying information related to welding and a welding torch for generating an electric arc in a welding base material, wherein the welding information providing device may include a first projection unit for projecting a marker on the welding base material and a first camera unit for photographing the marker projected on the welding base material.

A welding system according to another embodiment of the present disclosure includes a welding body that is configured to move for welding and a welding rod that extends from the welding body to generate an electric arc on the welding base material, and the welding body may include a second projection unit for projecting a marker on the welding base material and a second camera unit for photographing the marker projected on the welding base material.

In addition, for implementing the present disclosure, other methods, other systems, and a computer-readable recording medium storing a computer program for causing the methods to execute may be further provided.

Other aspects, features and advantages of the disclosure will become better understood through the accompanying drawings, the claims and the detailed description.

### BRIEF DESCRIPTION OF THE DRAWINGS

The above and other aspects, features, and advantages of certain embodiments of the disclosure will be more apparent from the following description taken in conjunction with the accompanying drawings, in which:
FIG . 1 is an example diagram of a welding system according to an embodiment of the present disclosure;
FIG. 2 is an example diagram of a welding environment corresponding to the welding system of FIG. 1;
FIG. 3 is a block diagram schematically illustrating the configuration of a welding information generating device in the welding system of FIG. 1;
FIG. 4 is a perspective view of a welding information providing device of the welding system of FIG. 1;
FIG. 5 is an example diagram for explaining an operation of a welding information providing device of the welding system of FIG. 1;
FIG. 6 is a flowchart for explaining the operation method of the welding system of FIG. 1.
FIG . 7 is an example diagram of a welding system according to an embodiment of the present disclosure;
FIG. 8 is a block diagram schematically illustrating the configuration of a welding management device in the welding system of FIG. 7;
FIG. 9 is an example diagram of a welding environment corresponding to a welding system according to an embodiment of the present disclosure;
FIG. 10 is a block diagram schematically illustrating the configuration of a welding robot in the welding system of FIG. 9; and
FIG . 11 is an example diagram of a welding system according to an embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The advantages and features of the present disclosure and methods for achieving them would become clear by referring to the embodiments described in detail together with the accompanying drawings. However, the present disclosure is not limited to the embodiments presented below, but may be implemented in various different forms, and should be understood to include all conversions, equivalents, and substitutes included in the spirit and technical scope of the present disclosure. The embodiments presented below are provided to ensure that the present disclosure is complete and to fully inform those skilled in the art of the present disclosure of the scope of the disclosure. In describing the present disclosure, if it is determined that a detailed description of related known technologies may make the gist of the present disclosure unclear, the detailed description will be omitted.

The terms used in this application are only used to describe specific embodiments and are not intended to limit the present disclosure. An expression used in the singular encompasses the expression of the plural, unless it has a clearly different meaning in the context. Also, it should be understood that the terms "comprises", "has", etc. when used in the present application, specify the presence of stated features, integers, steps, operations, elements, and/or components, but do not preclude the presence or addition of one or more other features, integers, steps, operations, elements, components, and/or groups thereof. Terms such as first, second, etc. may be used to describe various components, but the components should not be limited by these terms. These terms are used only for the purpose of distinguishing one component from another.

Additionally, in this application, a "unit" may be a hardware component, such as a processor or a circuit, and/or a software component executed by the hardware component, such as a processor.

Hereinafter, embodiments according to the present disclosure will be described in detail with reference to the accompanying drawings. In the description with reference to the accompanying drawings, identical or corresponding components are denoted with the same drawing numbers and redundant descriptions thereof will be omitted.

While such terms as "first," "second," etc., may be used to describe various components, such components must not be limited to these terms. The terms are used only to distinguish one component from another.

An expression used in the singular encompasses the expression of the plural, unless it has a clearly different meaning in the context.

In the present specification, it is to be understood that the terms such as "including," "having," and "comprising" are intended to indicate the existence of the features or components disclosed in the specification, and are not intended to preclude the possibility that one or more other features or components may exist or may be added.

In cases where an embodiment can be implemented differently, a specific process sequence may be performed differently from the described sequence. For example, two processes described in succession may be performed substantially at the same time, or may be performed in an order opposite to that in which they are described.

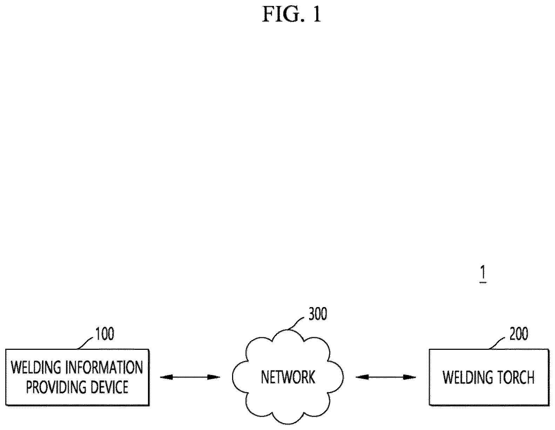

FIG . 1 is an example diagram of a welding system 1 according to an embodiment of the present disclosure. Referring to FIG. 1, the welding system 1 according to an embodiment may include a welding information providing device 100, a welding torch 200, and a network 300.

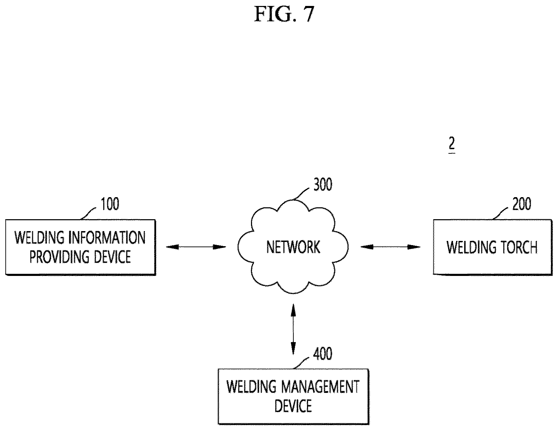

The welding information providing device 100 and the welding torch 200 may transmit and receive data through the network 300. The welding information providing device 100 and the welding torch 200 may be operated while matching in one-to-one correspondence, but one or more embodiments are not limited thereto, and a one-to-n relationship is possible. That is, n welding torches 200 may be connected to one welding information providing device, or one welding torch 200 may be connected to n welding information providing devices 100. In addition, the welding information providing device 100 and the welding torch 200 may transmit and receive data by communicating with a separate server (not shown) or a welding management device (400 in FIG. 7). In some embodiments, the welding torch 200 is not equipped with a communication function and may not perform communication.

The welding information providing device 100 may generate and display information related to welding. In some embodiments, the welding information providing device 100 may include a welding helmet. In some embodiments, information related to welding may include marker-related information, information about welding situations, welding guide information, welding advice information, etc.

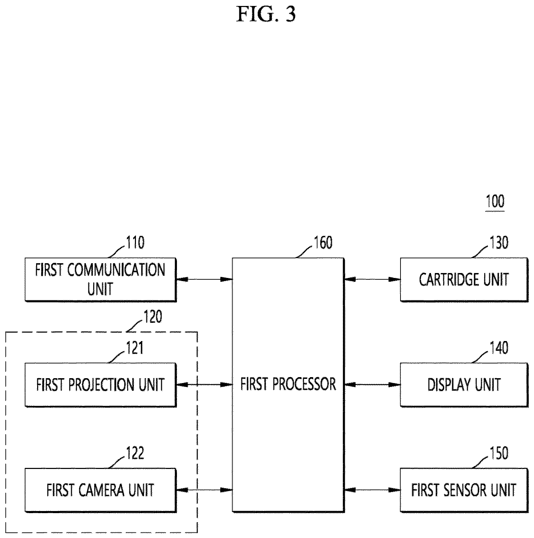

The welding information providing device 100 may provide information about a welding situation to an operator. In some embodiments, the welding information providing device 100 may obtain a welding image using at least one camera (for example, a first camera unit 122 in FIG. 3) mounted on the welding information providing device 100. The welding information providing device 100 may generate a composite image based on the obtained welding image and display the same to an operator. Here, the welding information providing device 100 may generate the composite image by using a high dynamic range (HDR) technology, and may display a high-definition composite image to the operator. The operator may visually check information about a shape of welding beads and a surrounding environment other than a portion adjacent to the welding light through the high-definition composite image.

In some embodiments, the welding information providing device 100 may obtain a welding image by placing a camera at a position equivalent to the operator's field of view. In this case, the welding information providing device 100 may provide more accurate welding information to the operator by acquiring a welding image that is similar to that to be obtained when the operator looks directly at the work site.

In some embodiments, the welding information providing device 100 may obtain images through two or more cameras in order to synthesize and provide high-definition welding images. The welding information providing device 100 may display each image obtained through two or more cameras through at least one display unit (140 in FIG. 3). In some embodiments, each of the two cameras may be placed in positions corresponding to the operator's left and right eyes. In this regard, the welding information providing device 100 may synthesize images obtained by repeatedly capturing while varying a shutter speed, an ISO sensitivity, and a gain value of each camera. In some embodiments, the welding information providing device 100 may improve the image quality through a contrast ratio treatment on the obtained composite image.

The welding information providing device 100 may provide a function of displaying welding information in preferred color (e.g., green and blue) by using RGB. In addition, the welding information providing device 100 may provide a function of correcting power of a magnifying glass (e.g., screen enlargement and reduction). Also, the welding information providing device 100 of the present disclosure may provide a temperature composite image by using an additional thermal imaging camera. Here, the welding information providing device 100 may indicate a welding temperature in a color. The welding information providing device 100 of the present disclosure may support a function of providing sound (e.g., notification alarm) or guidance voice with respect to the functions.

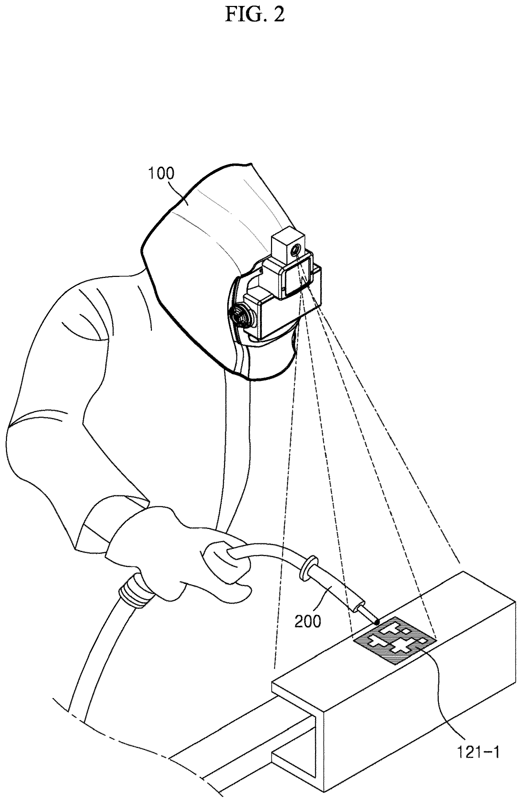

The welding information providing device 100 may project a marker 121-1 (see FIG. 2) onto a welding base material through a first projection unit 121 (see FIG. 3) mounted on the welding information providing device 100. In some embodiments, the marker 121-1 may include a visual pattern or mark projected on the welding base material. In some embodiments, the marker 121-1 may include an augmented reality (AR) marker.

The marker 121-1 may include a visually identifiable pattern. The marker 121-1 may include a unique identifier. The unique identifier may be used to identify the marker 121-1 and distinguish information or tasks linked to the marker 121-1. The first camera unit 122 may photograph the marker 121-1 projected on the welding base material.

The welding information providing device 100 may generate marker-related information including one or more of marker location information, marker direction information, and distance information by using the marker image frame captured by the first camera unit 122.

In some embodiments, the marker location information may include information indicating which part of the welding base material the marker 121-1 is located. In some embodiments, the marker direction information may include information indicating which direction the marker 121-1 faces on the welding base material. In some embodiments, the distance information may include information indicating the distance from the welding base material to the first camera unit 122 provided in the welding information providing device 100.

The welding torch 200 may generate an electric arc in the welding base material. The welding torch 200 may detect, through at least one sensor, information about welding situations including at least one piece of information about one or more of a welding position with respect to a real-time welding operation, a welding temperature, a welding direction, a welding inclination, a welding speed, and a distance between a welding base material and a welding torch. In an optional embodiment, the welding torch 200 may calculate or generate information about the welding situation using a signal detected through at least one sensor. The welding torch 200 may monitor a state of the torch and may change a setting value of a torch operation according to the information about welding situations.

In some embodiments, the welding information providing device 100 may receive information about operation settings and operation status from the welding torch 200 through the network 300 connected to the welding torch 200. The welding information providing device 100 may provide operation information to the operator through visual feedback based on the received welding information.

For example, when receiving sensing information about the welding temperature value, the welding information providing device100 may output a notification corresponding to the temperature value in various methods, e.g., light, vibration, message, etc. In this regard, the notification may be visual feedback provided on a display unit 140 or a display, or may be audible feedback provided through sound via a speaker (not shown)(e.g., notification alarm) or guiding voice.

In addition, the sensing information about the temperature value may include information about whether the temperature value exceeds a temperature range set in advance, etc. Also, the sensing information about the temperature value may include a numerical value, a grade, a level, etc. corresponding to the temperature value on a welding surface.

When the welding information providing device 100 determines that the temperature values of the welding torch 200 and the welding surface exceed the temperature range set in advance, the welding information providing device 100 may guide the operator to stop the operation. In some embodiments, the welding performed at the temperature exceeding the temperature range set in advance may result in quality degradation, and the operator may receive such guiding that the operator can adjust the temperature value of the torch.

In some embodiments, the guiding described above or described later may include signal processing which provides welding guide information requested or instructed to the operator by the welding information providing device 100 so that, during welding operation, the operator can perform accurate welding. In some embodiments, welding guide information may include one or more of operation instructions, operation changes, and operation stoppages.

In some embodiments, operation instructions may include, for example, visually guiding a specific point or path to be welded on the display unit 140 using a marker 121-1. Operation changes may include, for example, guiding the changed position or the welding speed to be adjusted on the display unit 140 when the position to be welded is changed or the welding speed needs to be adjusted. Operation stoppages may include, for example, visually guiding, on the display unit 140, warning an operator or providing an instruction to stop an operation, when a dangerous situation or malfunction is detected during welding operation. This welding guide information may be output visually and audibly.

When it is sensed that a current or voltage status of the welding torch 200 is abnormal, the welding information providing device 100 may provide the visual feedback for warning. In this regard, the visual feedback may denote providing of an icon indicating danger on a part of the display unit 140 of the welding information providing device 100, which is displaying the operation site. In another example, the welding information providing device 100 may provide an operation stoppage guiding through the visual feedback by repeatedly increasing and decreasing a saturation of a certain color (e.g., red) on the entire screen of the display unit 140.

In some embodiments, the welding information providing device 100 may detect information about welding situations through, in addition to at least one sensor (not shown) included in the welding torch 200, at least one sensor included in the welding information providing device 100 (for example, a first sensor unit 150 of FIG. 3). In this regard, the information about welding situations may include one or more of a welding position with respect to a real-time welding operation, light intensity, a welding temperature, a welding direction, a welding inclination, a welding speed, and a distance between the welding base material and the welding torch. In an optional embodiment, the welding information providing device 100 may calculate or generate information about the welding situation using a signal detected through at least one sensor.

The welding torch 200 may include at least one of all types of sensors capable of detecting status changes. For example, the sensors provided in the welding torch 200 may include an acceleration sensor, a gyro sensor, an illuminance sensor, a proximity sensor, a pressure sensor, a noise sensor, a video sensor, and/or a gravity sensor. The degree of light in the welding operation area detected by an illuminance sensor of the welding torch 200 may be transmitted to a first processor 160 (see FIG. 3) through a first communication unit 110 (see FIG. 3), and the first processor 160 may control a first camera unit 122 (see FIG. 3) based on the degree of light transmitted through the illuminance sensor of the welding torch 200, rather than through the sensor unit (see FIG. 3) of the welding information providing device 100.

Meanwhile, the acceleration sensor may be a component for detecting the movement of the welding torch 200. In detail, an acceleration sensor may measure dynamic forces such as acceleration, vibration, and impact of the welding torch 200, and thus may measure the movement of the welding torch 200. A gravity sensor may be a component for detecting the direction of gravity. That is, the detection result of the gravity sensor may be used to determine the movement of the welding torch 200 along with the acceleration sensor. In addition, a direction in which the welding torch 200 is gripped may be determined via the gravity sensor.

In addition to the above-described types of sensors, the welding torch 200 may further include various types of sensors such as a gyroscope sensor, a geomagnetic sensor, an ultrasonic sensor, and a radio frequency (RF) sensor, and may detect various changes regarding the welding operation environment.

Likewise, the welding information providing device 100 may provide guiding corresponding to information about welding situations based on information about welding situations which is detected by a sensor included in the welding information providing device 100.

After guiding for operation stoppage is provided, the welding information providing device 100 may provide guiding to change the operation of the welding torch 200 by sensing a preset user's movement or a preset user's voice.

In the case where communication between the welding information providing device 100 and the welding torch 200 is not sufficiently performed, the welding information providing device100 may obtain temperature values of the torch and the welding surface through an image sensing provided therein. For example, the welding information providing device100 may obtain temperature values of the torch and the welding surface based on image data obtained through a thermal imaging camera.

Although the above example illustrates that information received from the welding torch 200 only includes welding temperature information, the welding information providing device 100 may provide various guidance for various welding information.

The welding information providing device 100 may provide guiding for one or more of an operation instruction, an operation change, and an operation stoppage, with respect to one or more of a welding position, welding temperature, a welding direction, a welding inclination, a welding speed, and a distance between the welding base material and the welding torch, based on the information related to the marker 121-1.

The network 300 may connect the welding information providing device 100 and the welding torch 200 to each other. This network 300 may be, for example, a wired network such as a local area network (LAN), a wide area network (WAN), a metropolitan area network (MAN), or an integrated service digital network (ISDN), or a wireless network, such as a wireless LAN (WLAN), or a code-division multiple access (CDMA) network, or satellite communication. However, the scope of the present disclosure is not limited thereto. Additionally, the network 300 may transmit and receive information using short-range communication and/or long-distance communication. In this regard, short-range communication may include Bluetooth, radio frequency identification (RFID), infrared data association (IrDA), ultra-wideband (UWB), ZigBee, and Wi-Fi technology, and long-distance communication may include code-division multiple access (CDMA), frequency-division multiple access (FDMA), time-division multiple access (TDMA), orthogonal frequency-division multiple access (OFDMA), and single carrier frequency-division multiple access (SC-FDMA) technology.

The network 300 may include connections of network elements such as hubs, bridges, routers, and switches. The network 300 may include public networks such as the Internet and private networks such as secure enterprise private networks, and one or more connected networks, for example, a multi-network environment. Access to the network 300 may be provided through one or more wired or wireless access networks.

Furthermore, the network 300 may provide controller area network (CAN) communication, vehicle to infrastructure (V2l) communication, vehicle to everything (V2X) communication, wireless access in vehicular environment (wave) communication technology, Internet of Things (loT) networks where information between distributed components is exchanged and processed, and/or 5G communications.

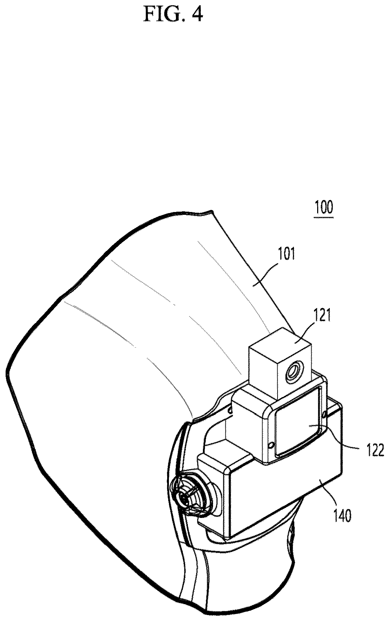

FIG. 2 is an example diagram of a welding environment corresponding to the welding system of FIG. 1, FIG. 3 is a block diagram schematically illustrating the configuration of a welding information generating device in the welding system of FIG. 1, and FIG. 4 is a perspective view of a welding information providing device of the welding system of FIG. 1. In the following description, parts that overlap with the description of FIG. 1 will be omitted. Referring to FIGS. 2 to 4, the welding information providing device 100 may include the first communication unit 110, a first image processing unit 120, a cartridge unit 130, a display unit 140, and a first sensor unit 150, and a first processor 160.

The first communication unit 110 may provide a communication interface for providing transmission and reception signals between the welding information providing device 100 and the welding torch 200 in the form of packet data in conjunction with the network 300. The first communication unit 110 may receive information about welding situations from the welding torch 200 and transmit a command to control the welding torch 200. In some embodiments, the command for controlling the welding torch 200 may include welding guide information. In some embodiments, the first communication unit 110 may transmit welding guide information to an external device other than the welding torch 200. In this regard, the external device may include various devices including a communication module, such as a smart phone of an operator/third party, a computer, etc.

The first communication unit 110 may be an element performing communication with various types of external devices according to various types of communication methods. The first communication unit 110 may include at least one of a Wi-Fi chip, a Bluetooth chip, a wireless communication chip, and a near field communication (NFC) chip. In particular, when a Wi-Fi chip or a Bluetooth chip is used, various connection information such as an SSID, a session key, etc. is transmitted/received first, and then, communication is connected using the above connection information and various information may be transmitted/received. The wireless communication chip refers to a chip that performs communication according to various communication standards such as IEEE, Zigbee, 3rd generation (3G), 3rd generation partnership project (3GPP), long term evolution (LTE), etc. The NFC chip refers to a chip operating in an NFC type using a frequency band of 13.56 MHz from among various RF-ID frequency bands such as 135 kHz, 13.56 MHz, 433 MHz, 860 to 960 MHz, 2.45 GHz, etc.

The first image processing unit 120 may include the first projection unit 121 and the first camera unit 122. The first projection unit 121 may project the marker 121-1 on the welding base material. FIG. 2 illustrates a situation in which the first projection unit 121 projects the marker 121-1 on a welding base material. The first projection unit 121 may include, for example, a beam projector. The first projection unit 121 may be provided on the first camera unit 122 as illustrated in FIGS. 2 and 4.

In some embodiments, the marker 121-1 may include a visual identifier or mark used in a welding operation. The marker 121-1 may indicate a specific location of the welding base material or may include information necessary for an operation. The marker 121-1 may include a special pattern, a symbol, or an identifier.

The first camera unit 122 may photograph the marker 121-1 projected on the welding base material and generate a marker image frame. FIG. 2 illustrates a situation in which the first camera unit 122 photographs the marker 121-1 projected on the welding base material. The first camera unit 122 may include, for example, a camera provided in a smartphone (not shown). The first camera unit 122 may be provided between the first projection unit 121 and the display unit 140, as shown in FIGS. 2 and 4.

In some embodiments, the first projection unit 121 and the first camera unit 122 may be provided separately as shown in FIGS. 2 and 4. In another embodiment, the first projection unit 121 and the first camera unit 122 may be integrated into one module.

Through projection of the marker 121-1 by the first projection unit 121, recognition of the marker 121-1 by the first camera unit 122, and analysis of the marker 121-1 by the first processor 160, the first processor 160 may determine information such as the location, direction, and distance of the welding operation, or provide guiding necessary for an operation. As a result, the welding operation may be automated and welding quality may be improved.

In some embodiments, the first camera unit 122 may include at least one camera and capture images of the welding operation site. The first camera unit 122 may be a camera located adjacent to the display unit 140 of the welding information providing device 100. In another embodiment, the first camera unit 122 may be designed to be detachable, so that the position thereof can be changed and mounted as needed. As described above, the first camera unit 122 may be mounted to be adjacent to the display unit 140, and in some embodiments, if needed, may be mounted on the side portion of a main body 101. Alternatively, the first camera unit 122 may be mounted on the upper part of the main body 101, that is, above the operator's head. The first camera unit 122 may receive a control command from the first processor 160 and in response to the control command, change settings such as a shutter speed, ISO sensitivity, and gain and capture the image of an welding operation site. The first camera unit 122 may include two or more cameras, each of which may capture a welding operation site using different shooting settings.

In some embodiments, the first camera unit 122 may include a thermal image camera. The welding information providing device 100 may obtain a temperature image by synthesizing a thermal image obtained by the thermal imaging camera with an image of a welding site.

In some embodiments, the welding information providing device 100 may further include a lighting unit (not shown) electrically connected to the first processor 160. The lighting unit (not shown) is located outside the welding information providing device 100 and may be configured to irradiate light toward at least a welding operation area. The lighting unit (not shown) may include a plurality of LED modules. The level of output of light emitted through the lighting unit (not shown) may be adjusted by control of the first processor 160. According to an embodiment, the lighting unit (not shown) may operate in conjunction with the operation of the first camera unit 122 under the control of the first processor 160.

The cartridge unit 130 may block welding light generated when welding occurs. That is, the cartridge unit 130 may increase the light blocking degree of a cartridge based on welding light information detected through the first sensor unit 150, for example, one or more of an image sensor, a photo sensor, and an optical sensor. In this case, the cartridge unit 130 may include, for example, a liquid crystal display panel (LCD panel) whose degree of darkening may be adjusted according to the alignment direction of the liquid crystal. For example, the cartridge unit 130 may be implemented as various panels, such as a vertical align (VA) type LCD, a twist nematic (TN) type LCD, and an in plane switching (IPS) type LCD.

The degree of darkening of the cartridge unit 130 may be adjusted automatically according to the brightness of the welding light. As described above, when automatically adjusted according to the brightness of the welding light, the first sensor unit 150 may be used. In the case where first sensor unit 150 detects the intensity of light to obtain the welding light information and information about intensity of welding light included in the welding light information is transferred in a predetermined electrical signal to the first processor 160, the first processor 160 may control the degree of darkening based on the intensity of the welding light.

In other words, the cartridge unit 130 may change the light blocking degree of a panel in real time to correspond to the intensity of light generated from the welding surface at the welding operation site, and the first camera unit 122 may capture the welding image in which a certain amount of welding light is blocked by the cartridge unit 130 mounted in front of the first camera unit 122.

In an optional embodiment, the light blocking degree of the cartridge unit 130 may be manually adjusted by an operator. In an embodiment, when the operator determines that the welding light is too bright while performing a welding operation and uses an input device (for example, jog shuttle, etc., not shown) that can adjust the light blocking degree to 6, 7, 8, 9, etc., the first processor 160 may control the degree of light blocking of the cartridge unit 130 in response to the light blocking degree selected by the input device.

In an optional embodiment, in the welding information providing device 100, the first camera unit 122 is located adjacent to the cartridge unit 130. Additionally, the welding information providing device 100 may not include the cartridge unit 130. In this case, the operator may perform a welding operation only with the welding image obtained through the first camera unit 122, and the first processor 160 may perform blackening on the welding image based on the brightness of the welding light detected by the first sensor unit 150 and output the result on the display unit 140. That is, when the first processor 160 has a blackening function, the cartridge unit 130 may not be included.

The display unit 140 may provide a high-definition composite image to the operator. In detail, the display unit 140 may include a display for displaying a composite image obtained by synthesizing images obtained by the first camera unit 122.

In some embodiments, the display unit 140 may provide an enlarged welding image compared to the currently displayed welding image, and may provide a welding image that is reduced compared to the enlarged welding image. The enlargement or reduction of the welding image may be determined by the first processor 160 or at the request of the operator.

The display included in the display unit 140 may display a high-definition composite image so that the operator may visually check the surrounding environment (e.g., a shape of a previously worked welding bead, etc.) other than a portion adjacent to the welding light. Also, the display unit 140 may provide guiding of visual feedback (e.g., welding processing direction) given to the operator with respect to the welding processing status.

The display included in the display unit 140 may be implemented with various display technologies such as a liquid crystal display (LCD), organic light-emitting diodes (OLED), a light-emitting diode (LED), liquid crystal on silicon (LcoS), and digital light processing (DLP). In this regard, the display according to an embodiment of the present disclosure is implemented as a panel of an opaque material and the operator may not be directly exposed to harmful light. However, one or more embodiments are not limited thereto, and the display may be implemented as a transparent display.

The first sensor unit 150 may include a plurality of sensor modules configured to detect various information on the welding site and obtain information about welding situations. In this regard, information about welding situations may include, for example, a welding position with respect to a real-time welding operation, a welding temperature, a welding direction, a welding inclination, a welding speed, and a distance between the welding base material and the welding torch. In addition, the first sensor unit 150 may include an optical sensor configured to detect a light level at least within a welding operation region.

According to an embodiment, the first sensor unit 150 may include an illuminance sensor, and at this time, the first sensor unit 150 may acquire information regarding the intensity of the welding light at the welding site. The first sensor unit 140 may further include various types of sensors such as a proximity sensor, a noise sensor, a video sensor, an ultrasonic sensor, and an RF sensor, in addition to the illuminance sensor, and may detect various changes related to a welding operation environment.

The first processor 160 may control the operation of the first projection unit 121 to project the marker 121-1 on the welding base material. In some embodiments, the first processor 160 may determine a specific location where welding is to be performed in response to welding conditions disclosed in a work guidebook described later. The first processor 160 may control the operation of the first projection unit 121 so that the marker 121-1 is projected at a determined specific location.

The first processor 160 may receive an image frame obtained by photographing the marker 121-1 from the first camera unit 122, and may generate marker-related information including one or more of marker location information, marker direction information, and information regarding a distance from the welding base material to the welding information providing device.

In some embodiments, the marker location information may include information indicating which portion of the welding base material the marker 121-1 is located. A detailed description of generating the marker location information by the first processor 160 is as follows. The first processor 160 may identify the marker 121-1. The first processor 160 may identify the marker information from an image frame of the marker photographed by the first camera unit 122. Here, the marker information may include a pattern, a feature, or an identifier. Next, the first processor 160 may calculate the two-dimensional (2D) image position for the marker 121-1. The first processor 160 may calculate a 2D image position indicating where the marker 121-1 is on a screen of the first camera unit 122. In this regard, the 2D image location of the marker 121-1 may be calculated on the basis of a center or particular point of the marker 121-1. Subsequently, the first processor 160 may estimate the camera parameter information regarding the first camera unit 122. Here, the camera parameter information may include internal parameter information and external parameter information. The internal parameter information may include information regarding internal characteristics of a camera which are related to distortion of a lens, a focal length, a resolution of an image sensor, and the like. The external parameter information may be information regarding a location and direction of the camera and may include information indicating which direction the camera faces at which location. Subsequently, the first processor 160 may convert the 2D location of the marker 121-1 into the three-dimensional (3D) location. The first processor 160 may convert the 2D image location of the marker 121-1 into a 3D space by using the camera parameter information. In detail, the first processor 160 may map a location of the marker 121-1 on a 2D image into a 3D space by considering a location and direction of the first camera unit 120. Subsequently, the first processor 160 may calculate a 3D location of the marker 121-1. The 3D location of the marker 121-1 may indicate a relative location between the first camera unit 120 and the marker 121-1. The 3D location of the marker 121-1 may be expressed as X, Y, and Z coordinates. The 3D location of the marker 206-1 may indicate which portion of the welding base material the marker 206-1 is located at. Subsequently, the first processor 160 may calculate a relative location between the marker 121-1 and the welding base material by using 3D location information regarding the marker 121-1. The relative location between the marker 121-1 and the welding base material may accurately indicate which portion of the welding base material the marker 121-1 is located at. Subsequently, the first processor 160 may update location information regarding the marker 121-1 in real time and track movement of the marker 121-1.

In some embodiments, the marker direction information may include information indicating which direction the marker 121-1 faces on the welding base material. A detailed description of generating the marker direction information by the first processor 160 is as follows. The first processor 160 may identify the marker 121-1. Next, the first processor 160 may calculate the 2D image position for the marker 121-1. Subsequently, the first processor 160 may estimate the camera parameter information regarding the first camera unit 122. Subsequently, the first processor 160 may convert the 2D location of the marker 121-1 into the 3D location. Subsequently, the first processor 160 may calculate a 3D direction vector of the marker 121-1. The first processor 160 may calculate the 3D direction vector of the marker 121-1 using the normalized 2D direction vector. To this end, the first processor 160 may calculate a direction vector between the center of the first camera unit 122 and the center of the marker 121-1 based on the center position of the marker 121-1. The first processor 160 may normalize the 2D direction vector to create a unit vector. As a result, the size of the direction vector may be 1. The first processor 160 may calculate the 3D direction vector of marker 121-1 by applying camera parameter information to the normalized 2D direction vector. As a result, the direction vector may be converted into a 3D vector indicating a certain distance from the marker 121-1. Thereafter, the first processor 160 may utilize the direction information of the marker 121-1 through the calculated 3D direction vector.

In some embodiments, the distance information may include information regarding a distance from the welding base material to the first camera unit 122 provided in the first processor 160. A detailed description of generating the distance information by the first processor 160 is as follows. The first processor 160 may detect the marker 121-1 by applying an image processing technology and a vision technology to an image frame of the marker captured by the first camera unit 122. Subsequently, the first processor 160 may estimate the camera parameter information regarding the first camera unit 122. Next, the first processor 160 may calculate the 2D image position for the marker 121-1. Subsequently, the first processor 160 may calculate the information about the distance from the marker 121-1 to the first camera unit 122 by using the 2D image location and the camera parameter information. The distance from the marker 121-1 to the first camera unit 122 may be calculated as a value obtained by dividing the product of an actual marker size and a focal length by an image size of the marker 121-1. Here, the actual marker size may indicate a preset actual size of the marker 121-1. The focal length may indicate a focal length of the first camera unit 122. The image size of the marker 121-1 may indicate a 2D image size of the marker 121-1 calculated from a marker image.

The first processor 160 may receive, from one or more of the first camera unit 122, at least one sensor provided in the first sensor unit 150, and at least one sensor provided in the welding torch 200, a result of detecting the information regarding the welding situation including one or more of a welding position, welding temperature, a welding direction, a welding inclination, a welding speed, and a distance between the welding base material and the welding torch.

On the basis of the marker-related information and the information regarding the welding situation, the first processor 160 may generate welding guide information for guiding the information regarding the welding situation on the basis of welding guide information including one or more of an operation instruction, an operation change, and an operation stoppage and output the welding guide information to the display unit 140.

In some embodiments, the first processor 160 may synthesize welding image frames received via the first camera unit 122 to generate the high-definition synthesized image. The first processor 160 may acquire the synthesized image by in parallel synthesizing frames which are acquired, by the first camera unit 122, in time order while setting different capturing conditions for respective frames. In detail, the first processor 160 may control the first camera unit 122 to perform capturing by changing a shutter speed, ISO sensitivity, and gain of the first camera unit 122.

Here, the first processor 150 may differently set capturing conditions according to conditions such as sensed welding light at the welding site, ambient light, and the degree of movement of the welding torch 200. In detail, the first processor 160 may set the capturing conditions such that the ISO sensitivity and the gain are reduced when the welding light and/or ambient light at the welding site increase. In addition, when detecting that the movement and/or work speed of the welding torch 200 is fast, the photographing conditions may be set to increase the shutter speed.

The first processor 160 may in parallel synthesize images having a preset number of frames. In the present embodiment, respective images within set frames may be captured under different capturing conditions.

In the case where the number of first camera units 122 is two or more, the first processor 160 may control the respective first camera units 122 to capture images at different capturing conditions. Even in this case, the first processor 160 may in parallel synthesize images having a preset number of frames.

The first processor 160 may control an overall operation of the welding information providing device 100 by using various types of programs stored in a memory (not shown). The memory may be operatively connected to the first processor 160 and may store at least one code in association with an operation performed by the first processor 160. In addition, the memory may perform a function of temporarily or permanently storing data processed by the first processor 160.

The first processor 160 may include a central processing unit (CPU), random access memory (RAM), read only memory (ROM), and a system bus. Here, the ROM may be a component that stores a set of commands for system booting, and the CPU may copy an operating system (O/S) stored in the memory of the welding information providing device 100 into the RAM according to the commands stored in the ROM, and may boot a system by executing the O/S. When booting is finished, the CPU may copy various applications stored in the memory to the RAM and execute the applications to perform various operations. The first processor 160 is described above as including only one CPU, but may be implemented with a plurality of CPUs (or DSPs, SoCs, or the like).

In the present embodiment, the first processor 160 may be implemented as a digital signal processor (DSP) for processing a digital signal, a microprocessor, and/or a time controller (TCON). However, one or more embodiments are not limited thereto, and the processor may include one or more from a CPU, a micro controller unit (MCU), a micro processing unit (MPU), a controller, an application processor (AP), a communication processor (CP), and an (advanced RISC machine?) ARM processor, or may be defined by a corresponding term. In addition, the first processor 160 may be implemented as a system on chip (SoC) having a processing algorithm provided therein, or large scale integration (LSI), or may be implemented in the form of a field programmable gate array (FPGA).

Meanwhile, although not shown, the welding torch 200 may include a communication unit, a sensor unit, and a processor.

The communication unit may transmit and receive data with the welding information providing device 100. The communication unit includes a module capable of short-range wireless communication (e.g., Bluetooth, Wifi, Wifi-Direct) or long-distance wireless communication (3G, High-Speed Downlink Packet Access (HSDPA) or LTE).

A sensor unit may be included in the welding torch 200 and may detect the information regarding the welding situation including a welding temperature, a welding speed, a welding inclination, a welding direction, a distance between a base material and the welding torch 200, and the like.

A sensor unit may detect at least one of various changes such as a change in posture of the operator holding the welding torch 200, a change in roughness of a welding surface, and a change in acceleration of the welding torch 200, and may transmit, to a processor, an electrical signal corresponding thereto. In other words, a sensor unit may detect a change in a state based on the welding torch 200, generate a detection signal accordingly, and transmit the generated detection signal to a processor.

In some embodiments, a sensor unit may include various types of sensors and may detect a change in a state of the welding torch 200 when power is supplied to at least one preset sensor according to control (or on the basis of user setting) during driving of the welding torch 200.

In this case, the sensor unit may include at least one device from among all types of sensing devices capable of detecting a change in a state of the welding torch 200. For example, the sensor unit may include at least one of various sensing devices such as an acceleration sensor, a gyro sensor, an illuminance sensor, a proximity sensor, a pressure sensor, a noise sensor, a video sensor, a gravity sensor, etc. The light intensity within the welding operation area detected by the illuminance sensor of the welding torch 200 may be transmitted to the first processor 160 through the communication unit, and the first processor 160 may control the lighting unit (not shown) and/or first camera unit 122 based on the light intensity transmitted through the illuminance sensor of the welding torch 200, without through the first sensor unit 150 of the welding information providing device 100.

Meanwhile, the acceleration sensor may detect the movement of the welding torch 200. In detail, the acceleration sensor may measure dynamic forces such as acceleration, vibration, and impact of the welding torch 200, and thus may measure the movement of the welding torch 200.

The gravity sensor is an element for sensing a direction of gravity. That is, the sensing result of the gravity sensor may be used to determine the movement of the welding torch 200 along with the acceleration sensor. In addition, a direction in which the welding torch 200 is gripped may be determined via the gravity sensor.

In addition to the above-described types of sensors, the welding torch 200 may further include various types of sensors such as a gyroscope sensor, a geomagnetic sensor, an ultrasonic sensor, and a radio frequency (RF) sensor, and may detect various changes regarding the welding operation environment.

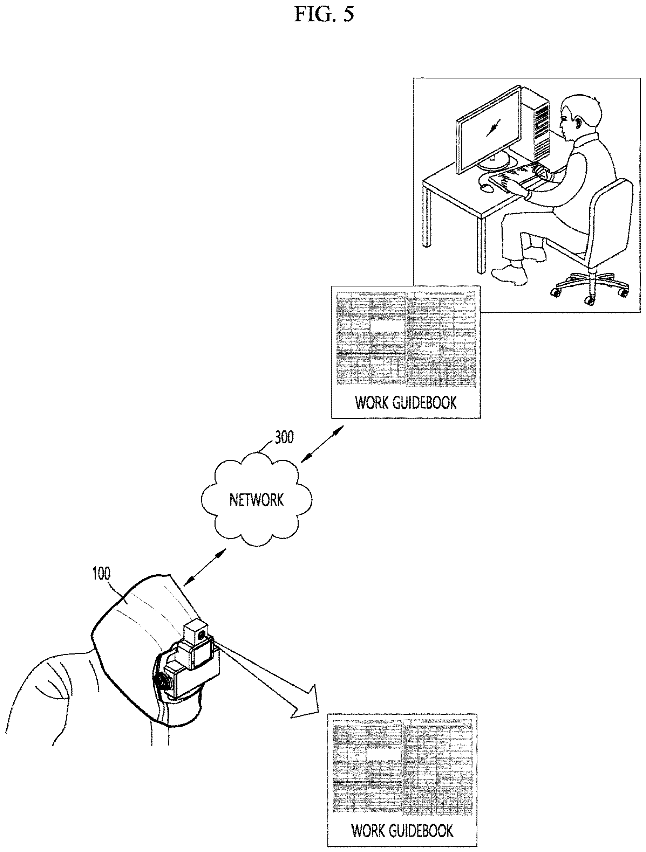

FIG. 5 is an example diagram for explaining an operation of a welding information providing device of the welding system of FIG. 1. In the following description, parts that overlap with the description of FIGS. 1 to 4 will be omitted.

Referring to FIG. 5, it shows that the welding information providing device 100 receives and displays a work guidebook. The welding information providing device 100 may output, to the display unit 140, the work guidebook received from an external device through wireless communication so that an operator may view the work guidebook. When the reception of the work guidebook by the first communication unit 110 is identified, the first processor 160 may display the same on the display unit 140.

Here, the external device may include various types of electronic devices including a communication module, such as a smartphone and a computer of an operator/third party. In addition, the external device may include a separate server (not shown) or a welding management device 400 of FIG. 7 (10 ?). In the present embodiment, the work guidebook may include a welding procedure specification (WPS), a procedure qualification record (PQR), or the like which describes in detail all welding conditions demanded for a welding portion.

The first processor 160 may generate welding guide information for guiding information regarding a welding situation on the basis of the work guidebook and marker-related information and output the welding guide information to the display unit 140.

The operator may perform substantial welding operation by referring to the work guidebook output to the display unit 140 of the welding information providing device 100.

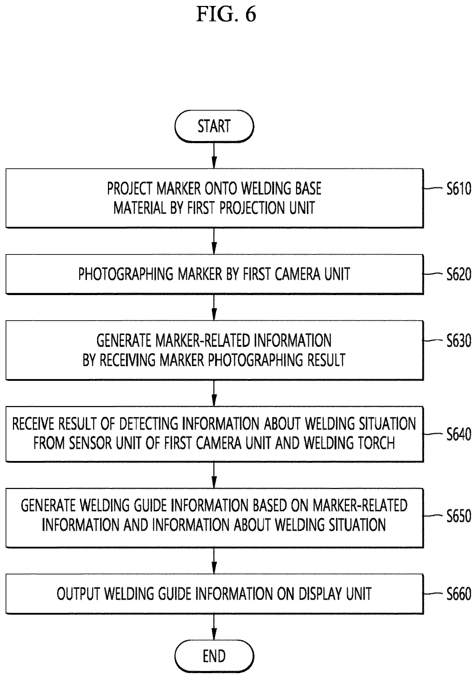

FIG. 6 is a flowchart for explaining the operation method of the welding system of FIG. 1. The same description of FIG. 6 as the descriptions of FIGS. 1 to 5 is omitted below. The method of operating the welding system according to the present embodiment is described as being performed by the first processor 160 of the welding information providing device 100 with the help of surrounding components.

Referring to FIG. 6, in operation S610, the first processor 160 may control the operation of the first projection unit 121 to project the marker 121-1 on the welding base material. Under the control of the first processor 160, the first projection unit 121 may project the marker 121-1 on the welding base material.

In operation S620, the first processor 160 may control the operation of the first camera unit 122 to photograph the marker 121-1 projected on the welding base material. Under the control of the first processor 160, the first camera unit 122 may photograph the marker 121-1 projected on the welding base material.

In operation S630, the first processor 160 may receive, from the first camera unit 122, an image frame obtained by photographing the marker 121-1 and generate marker-related information. In some embodiments, marker-related information may include one or more of marker location information, marker direction information, and information about the distance from the welding base material to the welding information providing device.

In operation S640, the first processor 160 may receive a result of detecting information regarding a welding situation from one or more of the first camera unit 122, at least one sensor provided in the first sensor unit 150, and at least one sensor provided in the welding torch 200. In the present embodiment, the information regarding the welding situation may include one or more of a welding location, a welding temperature, a welding direction, a welding inclination, a welding speed, and a distance between the welding base material and the welding torch 200.

In operation S650, the first processor 160 may generate welding guide information on the basis of the marker-related information and the information regarding the welding situation. In some embodiments, welding guide information may include one or more of operation instructions, operation changes, and operation stoppages. In addition, the welding guide information may include a series of information related to guiding as described above.

In operation S660, the first processor 160 may output the welding guide information as visual information to the display unit 140. In the present embodiment, the first processor 160 may output the welding guide information as auditory information to a speaker.

FIG . 7 is an example diagram of a welding system according to an embodiment of the present disclosure; The same description of FIG. 7 as the descriptions of FIGS. 1 to 6 is omitted below. Referring to FIG. 7, a welding system 2 according to an embodiment may include the welding information providing device 100, the welding torch 200, the network 300, and the welding management device 400. In the present embodiment, the descriptions related to the welding information providing device 100, the welding torch 200, and the network 300 are the same as the above descriptions, and thus are omitted below.

The welding management device 400 may be connected to the welding information providing device 100 and the welding torch 200 through the network 300 and may provide the welding information providing device 100 with welding education content for guiding an operator to acquire a welding skill and perform safe welding.

In the present embodiment, the welding education content may include various types of information related to a welding skill guide, welding equipment use, welding safety, welding quality management, an actual welding scenario, a visual material and video, interactive learning, and the like.

In the present embodiment, the welding management device 400 may receive welding operation video data for a skilled operator and apply, to the welding education content, importance of know-how information extracted through analysis of a result of welding by the skilled operator. The welding management device 400 may build the welding education content into a database.

The welding management device 400 may receive a result of welding by the operator, which is received from the welding information providing device 100, in correspondence to the welding education content. The welding management device 400 may provide the welding information providing device 100 with welding advice information for advising on the result of welding by the operator by comparing the result of welding by the operator with the preset result of welding by the skilled operator.

In the present embodiment, the welding advice information may include one or more of visual information and auditory information. In the present embodiment, the welding advice information may be output to one or more of the welding information providing device 100 and a terminal (not shown) (e.g., a smartphone, a computer, or the like) of the operator.

The welding management device 400 may be a database server that provides data needed for applying various types of artificial intelligence algorithms. The welding management device 400 may predict the welding advice information by using an artificial intelligence algorithm and provide the predicted welding advice information to one or more of the welding information providing device 100 and the terminal of the operator.

Here, artificial intelligence (Al) may be a field of computer engineering and information technology that studies a method of enabling a computer to do thinking, learning, self-development, and the like that may be done with the intelligence of a human and may enable the computer to imitate an intelligent behavior of the human.

In addition, the artificial intelligence may not be present by itself, but may have many direct and indirect relationships with other fields of computer science. In particular, in modern times, attempts to introduce artificial intelligence elements in various fields of information technology and use the artificial intelligence elements for problem-solving in the fields have been highly actively made.

Machine learning may be a field of artificial intelligence and may include a field of research that gives a computer an ability to learn without an explicit program. In detail, the machine learning may refer to a technology that researches and establishes a system that, on the basis of empirical data, learns, performs prediction, and improves performance thereof, and an algorithm therefor. Algorithms of the machine learning may take a method of establishing a particular model to derive prediction or decision on the basis of input data, rather than executing strictly fixed static program instructions.

Both unsupervised learning and supervised learning may be used as a machine learning method for such an artificial neural network. In addition, a deep learning technology, which is a type of machine learning, may perform learning by going down to a deep level at multi-levels, on the basis of data. The deep learning may indicate a set of machine learning algorithms that extract core data from a plurality of pieces of data while increasing levels.

In the present embodiment, the welding management device 400 may be independently present in the form of a server or may implement a welding education function for the operator, which includes the welding education content and the welding advice information provided by the welding management device 400, in the form of an application and load the application on the terminal of the operator.

The terminal of the operator may receive a welding education service by accessing a welding education application and/or a welding education site provided by the welding management device 400.

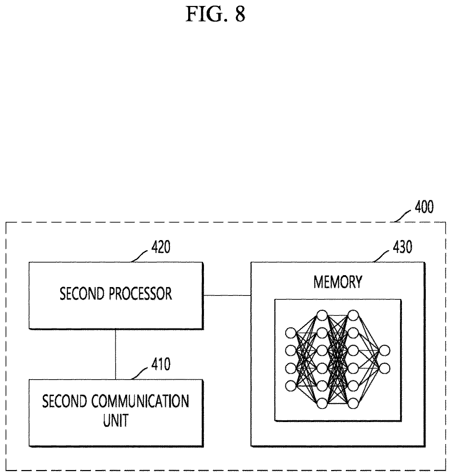

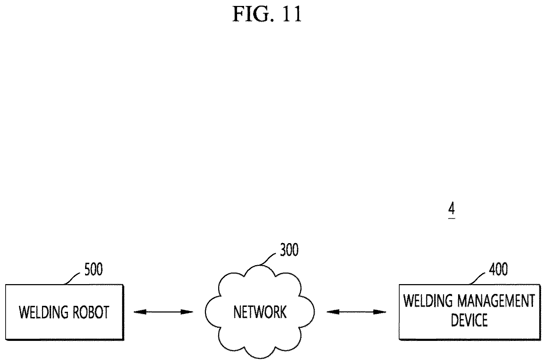

FIG. 8 is a block diagram schematically illustrating the configuration of a welding management device 400 in the welding system of FIG. 7. The same description of FIG. 11 as the descriptions of FIGS. 1 to 7 is omitted below. Referring to FIG. 8, a welding management device 400 may include a second communicator 410, a second processor 420, and a memory 430.

The second communicator 410 may be linked with the network 300 to provide a communication interface needed to provide a signal transmitted and received among the welding information providing device 100, the welding torch 200, and the welding management device 400 in the form of packet data. Here, the communication interface may be a medium that connects the welding information providing device 100, the welding torch 200, and the welding management device 400 to one another and may include a path that provides a connection path through which the welding management device 400 may connect to one or more of the welding information providing device 100 and the welding torch 200 and then transmit and receive information thereto and therefrom. Additionally, the second communicator 410 may be a device that includes hardware and software necessary to transmit and receive signals such as control signals or data signals through wired or wireless connections with other network devices.

The second processor 420 may provide the welding information providing device 100 with welding education content for guiding an operator to acquire a welding skill and perform safe welding. In the present embodiment, the welding education content may include various types of information related to a welding skill guide, welding equipment use, welding safety, welding quality management, an actual welding scenario, a visual material and video, interactive learning, and the like.

From among the welding education content, information related to the welding skill guide may include descriptions of a basic principle and various welding skills of welding. operators may understand how to perform welding through learning about information related to the welding skill guide.

From among the welding education content, information related to the welding equipment use may include information for guiding correct use of welding equipment and tools. In detail, the information related to the welding equipment use may include information for guiding manipulation methods and maintenance methods of the welding information providing device 100 and the welding torch 200.

From among the welding education content, information related to the welding safety may include information for guiding a warning and a safety procedure regarding a risk that may occur during welding operation.

From among the welding education content, information related to the welding quality management may include information for promoting understanding of welding quality and guiding a quality management procedure and a test method.

From among the welding education content, information related to the actual welding scenario may include information for simulating an actual welding scenario or guiding actual work. Accordingly, the operator may practice how to cope with actual welding operation.

From among the welding education content, information related to the visual material and the video may include visual materials such as a picture, a graph, a drawing, and a video related to welding. Accordingly, the description of the welding may be more clearly communicated to the operator.

From among the welding education content, information related to the interactive learning may include a quiz, a simulation, an interactive exercise question, and the like. Accordingly, the degree of understanding of the operator related to welding may be improved.

The second processor 420 may receive welding operation video data for a skilled operator and apply, to the welding education content, importance of know-how information extracted through analysis of a result of welding by the skilled operator.

The second processor 420 may receive a result of welding by the operator, which is received from the welding information providing device 100, in correspondence to the welding education content. The second processor 420 may generate welding advice information for advising on the result of welding by the operator and provide the generated welding advice information to the welding information providing device 100, by comparing the result of welding by the operator with a preset result of welding by the skilled operator.

In some embodiments, the second processor 420 may provide the welding information providing device 100 with the actual welding scenario included in the welding education content. The actual welding scenario may include information on controlling of operation of the first projection unit 121 that projects the marker 121-1 on the welding base material. The first camera unit 122 may obtain an image frame of the result of welding performed by the operator using the marker 121-1 projected on the welding base material. The second processor 420 may receive the image frame of the result of welding, which is acquired by the first camera unit 122. The second processor 420 may generate the welding advice information for advising on the result of welding by the operator and provide the welding advice information to the welding information providing device 100, by comparing the image frame of the result of welding by the operator with an image frame of the preset result of welding by the skilled operator.

The second processor 420 may evaluate accuracy, completeness, a defect rate, and the like of the welding operation and generate the welding advice information, by comparing the result of welding by the operator with the preset result of welding by the skilled operator. Here, the welding advice information may include a portion that the operator needs to improve during welding, a potential risk factor, technical advice, a suggestion for improving welding quality, and the like.

The second processor 420 may output the welding advice information to one or more of the welding information providing device100 and a terminal of the operator.

In an optional embodiment, the second processor 420 may receive a welding result image frame corresponding to the result of welding by the operator and predict the welding advice information, by using a deep neural network model that is pre-trained to predict welding advice information by receiving a welding result image frame. Here, the deep neural network model may be a model that is trained in a supervised learning method through training data that uses a welding result image frame as an input and uses welding advice information as a label.

The second processor 420 may train an initially set deep neural network model in a supervised learning method by using labeled training data. Here, the initially set deep neural network model may be an initial model designed to be configured as a model capable of predicting welding advice information and may have parameter values that are set to random initial values. When the initial model is trained by using the above-described training data, parameter values thereof may be optimized, and thus, the initial model may be completed as a prediction model capable of accurately predicting welding advice information regarding a welding result image frame.

The second processor 420 may control an overall operation of the welding management device 400. Here, a processor may refer to, for example, a data processing device built in hardware, which has a physically structured circuit to perform a function expressed by code or instructions included in a program. Examples of the data processing device built in the hardware may include processing devices such as a microprocessor, a central processing unit, a processor core, a multiprocessor, an ASIC, and an FPGA, but the scope of the disclosure is not limited thereto.

The memory 430 may be operatively connected to the second processor 420 and may store at least one code in association with an operation performed by the second processor 420.

In addition, the memory 430 may perform a function of temporarily or permanently storing data processed by the second processor 420. Here, the memory 430 may include a magnetic storage medium or a flash storage medium, but the scope of the disclosure is not limited thereto. The memory 430 may include an internal memory and/or an external memory and may include a volatile memory such as DRAM, SRAM, or SDRAM, a nonvolatile memory such as OTPROM, PROM, EPROM, EEPROM, mask ROM, flash ROM, NAND flash memory, or NOR flash memory, a flash drive such as an SSD, a CF card, an SD card, a micro-SD card, a mini-SD card, an xD card, or a memory stick, or a storage device such as an HDD.

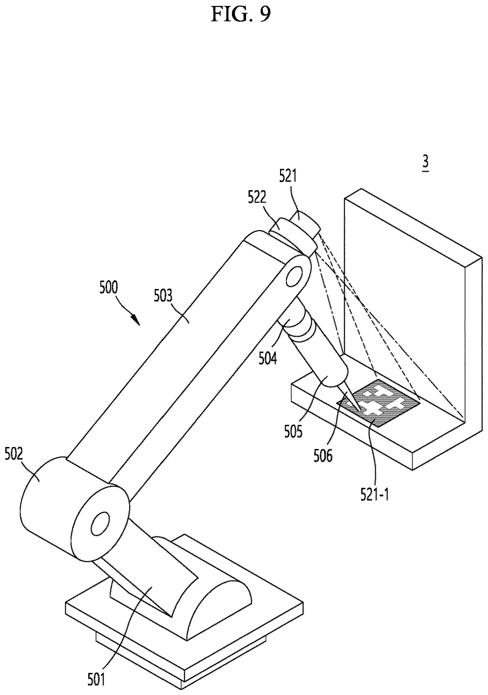

FIG. 9 is an example diagram of a welding environment corresponding to a welding system according to an embodiment of the present disclosure; The same description of FIG. 9 as the descriptions of FIGS. 1 to 8 is omitted below. Referring to FIG. 9, a welding system 3 according to an embodiment may include a welding robot 500.

The welding robot 500 may be a welding system for performing automatic welding and may be used to improve welding quality and improve productivity by performing repetitive and accurate work in a welding process. The welding robot 500 may be programmed, or may oversee welding operation by using a sensor and a vision system, enhance safety of an operator, and save manpower.

The welding robot 500 according to the present embodiment may include a welding leg 501, a joint portion 502, a welding body 503, a welding arm 504, a welding rod head 505, a welding rod 506, a second image processing unit 520.

The welding robot 500 according to the present embodiment may have a structure formed of multiple joints and may have a multi-axis structure. In the structure formed of the multiple joints, a plurality of welding legs 501 may be connected to a plurality of joint portions 502 and may respectively perform linear motion or rotational motion.

The welding leg 501 may include a hollow-type motor (not shown) having a hollow through a wire passes, a feed roller (not shown) for feeding the wire, and a speed sensor (not shown) for detecting a feed speed of the wire. The hollow-type motor may have an integrated joint structure for estimate driving. The hollow-type motor may have a through hole of a certain diameter on a central axis to allow the passage of the wire. The feed roller may be connected to a separate motor (not shown) and may provide a feed force by means of a frictional force. The speed sensor may be configured in a non-contact manner not to increase a feed load of the wire.

In the present embodiment, the welding leg 501 and the joint portion 502 may be included in the welding body 503. Accordingly, the welding body 503 may move for welding. A second projection unit 521 and a second camera unit 522 may be provided in the head portion connected to the welding body 503. The second projection unit 521 may project a marker on the welding base material. The second camera unit 522 may photograph a marker 521-1 projected on the welding base material.

In some embodiments, the second projection unit 521 and the second camera unit 522 may be provided separately as shown in FIG. 9. In another embodiment, the second projection unit 521 and the second camera unit 522 may be integrated into one module. The operations of the second projection unit 521 and the second camera unit 522 according to the present embodiment are the same as the operations of the first projection unit 121 and the first camera unit 122 provided in the welding information providing device 100, and accordingly, will be omitted herein.

A welding arm 504 may be provided on a side surface of the welding body 503, and the welding rod head 505 and the welding rod 506 may be provided on one side of the welding arm 504. The welding rod 506 may perform welding by generating an electric arc based on the marker 521-1 projected onto the welding base material. In the present embodiment, a minute three-dimensional operation by linear movement and rotational movement of the welding rod head 505 and the welding rod 506 may be performed by driving of a motor (not shown) connected by the wire.

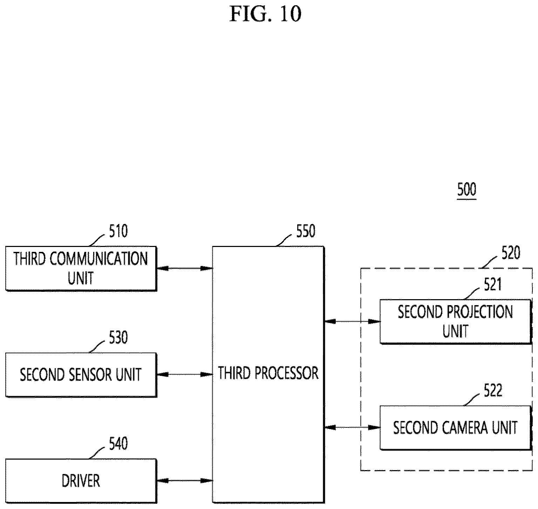

FIG. 10 is a block diagram schematically illustrating the configuration of a welding robot in the welding system of FIG. 9; and The same description of FIG. 10 as the descriptions of FIGS. 1 to 9 is omitted below. Referring to FIG. 10, the welding robot 500 may include a third communication unit 510, a second image processing unit 520, a second sensor unit 530, a driver 540, and a third processor 550.

The third communication unit 510 may be linked with the network 300 to provide a communication interface needed to provide a signal transmitted and received between the welding robot 500 and a welding management device 400 described below in the form of packet data. The third communication unit 510 may transmit information regarding a welding situation to the welding management device 400 and receive a command for controlling the welding robot 500 from the welding management device 400. In the present embodiment, the command for controlling the welding robot 500 may include welding guide information.

The second image processing unit 520 may include the second projection unit 521 and the second camera unit 522. The second projection unit 521 may project the marker 521-1 on the welding base material. FIG. 9 shows a situation in which the second projection unit 521 projects the marker 521-1 on the welding base material. The second projection unit 521 may include, for example, a beam projector. The second projection unit 521 may be provided on the upper part of the second camera unit 522 as illustrated in FIG. 9.

In some embodiments, the marker 521-1 may include a visual identifier or mark used in a welding operation. The marker 521-1 may indicate a specific location of the welding base material or may include information necessary for an operation. The marker 521-1 may include a special pattern, a symbol, or an identifier.

The first camera unit 522 may photograph the marker 521-1 projected on the welding base material and generate a marker image frame. FIG. 9 illustrates a situation in which the second camera unit 522 photographs the marker 521-1 projected on the welding base material. The second camera unit 522 may include, for example, a camera provided in a smartphone (not shown). The second camera unit 522 may be provided at the bottom of the second projection unit 521 as shown in FIG. 9. In some embodiments, the second camera unit 522 may include at least one camera and may capture an image of a welding operation site. In some embodiments, the second camera unit 522 may include a vision sensor that monitors a welding base material and the welding rod 506 in real time and captures an image.

The second sensor unit 530 may include a plurality of sensor modules configured to detect various types of information regarding an operation of the welding robot 500 and the welding site and acquire information regarding a welding situation. Here, the information regarding the welding situation may include a welding location, a welding temperature, a welding direction, a welding inclination, and a welding speed for real-time welding operation, a distance between a welding base material and the welding rod 506, and the like. In addition, the second sensor unit 530 may include an optical sensor configured to detect the light intensity at least within a welding operation region.

The second sensor unit 530 may include a force and torque sensor for measuring a force and torque generated during the welding operation. Accordingly, welding quality may be controlled by adjusting pressure of the welding rod 506 and monitoring a load generated during the welding operation. The second sensor unit 530 may include an accelerometer and a gyroscope that track and control a movement and direction of the welding robot 500. Accordingly, an exact location of the welding robot 500 may be identified and stability may be maintained during the welding operation. The second sensor unit 530 may measure the distance between the welding base material and the welding rod 506. Accordingly, the welding robot 500 may be prevented from colliding with the welding base material and may accurately access a welding point. The second sensor unit 530 may include a gas sensor that detects and monitors a gas leak occurring during the welding work. The type of second sensor unit 530 is not limited to the above-described examples, and the second sensor unit 530 may include any sensor capable of detecting various types of information regarding the operation of the welding robot 500 and a welding site and acquiring the information regarding the welding situation.

The driver 540 may drive the welding robot 500 under control of the third processor 550. The driver 540 may control motion of the welding robot 500 by adjusting a location, speed, and acceleration of the welding robot 500 under control of the third processor 550. In the present embodiment, the driver 540 may include a servo motor (not shown) that moves each joint or motion axis of the welding robot 500 and controls a location, a speed, torque, and the like. In addition, the driver 540 may include a step motor (not shown), a hybrid motor (not shown), a linear motor (not shown), a hydraulic and pneumatic system (not shown), and the like, which control the motion of the welding robot 500.

The third processor 550 may control an operation of the welding robot 500. The third processor 550 may receive, from the second camera unit 522, an image frame obtained by photographing the marker 521-1 and generate marker-related information. In this regard, the marker-related information may include one or more of marker location information, marker direction information, and information regarding the distance from the welding base material to the second camera unit 522.

The third processor 550 may receive a result of detecting the welding situation from one or more of the second camera unit 522 and the second sensor unit 530. Here, the result of detecting the welding situation may include one or more of a welding location, a welding temperature, a welding direction, a welding inclination, a welding speed, and a distance between the welding base material and the welding rod 506.

The third processor 550 may generate welding guide information including one or more of an operation instruction, an operation change, and an operation stoppage based on marker-related information and information about welding situations.

The third processor 550 may control the operation of the welding robot 500 in response to the welding guide information. Controlling the operation of the welding robot 500 may include controlling movement of the welding body 503 and controlling an operation of the welding rod 506.

In some embodiments, the third processor 550 may determine a specific location where welding is to be performed in response to welding conditions disclosed in a work guidebook described later. The third processor 550 may control the operation of the second projection unit 521 to project the marker 521-1 at the determined specific location.

FIG . 11 is an example diagram of a welding system according to an embodiment of the present disclosure. The same description of FIG. 11 as the descriptions of FIGS. 1 to 10 is omitted below. Referring to FIG. 11, a welding system 4 according to an embodiment may include a network 300, a welding management device 400, and a welding robot 500.

In the present embodiment, the welding management device 400 may be a server or an external device for controlling an operation of the welding robot 500.

The welding management device 400 may receive, from the welding robot 500, an image frame obtained by capturing a marker and generate marker-related information. The welding management device 400 may receive, from the welding robot 500, a result of detecting information regarding a welding situation.

The welding management device 400 may generate welding guide information on the basis of the marker-related information and the information regarding the welding situation. The welding management device 400 may generate a signal for controlling the operation of the welding robot 500, on the basis of the welding guide information and transmit the generated signal to the welding robot 500.

Embodiments according to the disclosure described above may be implemented in the form of a computer program that may be executed on a computer via various types of components, and the computer program may be recorded on a computer-readable medium. Here, the medium may include magnetic media, such as a hard disk, a floppy disk, and a magnetic tape, optical recording media, such as CD-ROM and DVD, magnetooptical media, such as a floptical disk, and hardware devices, such as ROM, RAM, and flash memory devices specially configured to store and execute program instructions.

Meanwhile, the computer program may be specially designed and configured for the disclosure, or may be known to and used by those skilled in the art of the computer software field. Examples of the computer program may include not only machine language code generated by a compiler but also high-level language code that may be executed by a computer by using an interpreter or the like.

In the description of the disclosure (particularly, in claims), the use of the term "the" and similar indicative terms may correspond to both the singular and the plural forms. In addition, when a range is described in the disclosure, the disclosure includes the application of individual values within the range (unless there is a statement to the contrary), and each individual value constituting the range is described in the detailed description of the disclosure.

The operations constituting the method according to the disclosure may be performed in any appropriate order unless an order of the operations is explicitly stated or stated to the contrary. The disclosure is not necessarily limited according to the order of description of the operations. The use of all examples or example terms (e.g., and the like) in the disclosure is simply to describe the disclosure in detail, and the scope of the disclosure is limited due to the examples or example terms unless limited by claims. In addition, those skilled in the art may appreciate that various modifications, combinations and changes may be made according to design conditions and factors within the scope of the appended claims or equivalents thereof.

Therefore, the spirit of the disclosure should not be determined while limited to the embodiments described above, and all scopes equivalent to or equivalently changed from the claims as well as the claims described below should fall within the scope of the spirit of the disclosure.

According to the disclosure, the disclosure is to improve welding accuracy and welding quality by tracking an exact location of a welding portion and adjusting welding operation accordingly.

Also, safety of a welding operation environment may be improved and safety of a welding operator may be secured.

In addition, by educating and training a welding operator on a safe and effective welding skill, risks of an accident and injury may be reduced, and the welding operator may be helped to perform accurate and consistent welding.

In addition, welding time and labor may be reduced by quickly and accurately performing the welding operation through welding automation.

The effects of the disclosure are not limited to those mentioned above, and other effects not mentioned may be clearly understood by one of ordinary skill in the art from the following description.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope as defined by the following claims.

## Claims

1. A welding system comprising:
a welding information providing device configured to generate and display information related to welding; and
a welding torch configured to generate an electric arc in a welding base material, wherein
the welding information providing device comprises:
a first projection unit that projects a marker onto the welding base material; and
a first camera unit that photographs the marker projected on the welding base material.

2. The welding system of claim 1, wherein
the first projection unit and the first camera unit are integrated into one module.

3. The welding system of claim 1 or 2, wherein
the welding information providing device comprises:
a display unit that displays an image related to welding; and
a first processor, wherein
the first processor is configured to:
receive an image frame obtained by photographing the marker from the first camera unit, and generate marker-related information including one or more of marker position information, marker direction information, and information about a distance from the welding base material to the first camera unit;
receive, from one or more of the first camera unit, a first sensor unit, and a sensor provided in the welding torch, a result of detecting information regarding a welding situation comprising one or more of a welding location, a welding temperature, a welding direction, a welding inclination, a welding speed, and a distance between the welding base material and the welding torch;
generate welding guide information comprising one or more of an operation instruction, an operation change, and an operation stoppage, on the basis of the marker-related information and the information regarding the welding situation; and
output the welding guide information to the display unit.

4. The welding system of one of the preceding claims, further comprising a welding management device connected to the welding information providing device and the welding torch through a network and configured to provide the welding information providing device with welding education content guiding an operator to acquire a welding skill and perform safe welding.

5. The welding system of claim 4, wherein
the welding management device provides the welding information providing device with welding advice information advising on a result of welding by the operator by comparing the result of welding by the operator, which is received from the welding information providing device, with a preset result of welding by a skilled operator.

6. The welding system of claim 4 or 5, wherein
the welding management device comprises
a second processor configured to predict welding advice information by receiving a welding result image frame corresponding to the result of welding by the operator, by using a deep neural network model pre-trained to predict welding advice information by receiving a welding result image frame, wherein
the deep neural network model is a model trained in a supervised learning method through training data that uses a welding result image frame as an input and uses welding advice information as a label.

7. A welding system comprising:
a welding body that moves for welding; and
a welding rod extending from the welding body and configured to generate an electric arc in a welding base material, wherein
the welding body comprises:
a second projection unit that projects a marker onto the welding base material; and
a second camera unit that photographs the marker projected on the welding base material.

8. The welding system of claim 7, wherein
the second projection unit and the second camera unit are integrated into one shooting module.

9. The welding system of claim 7 or 8, further comprising:
a third processor that controls the movement of the welding body and the operation of the welding rod,
the third processor is configured to:
receive an image frame obtained by photographing the marker from the second camera unit, and generate marker-related information including one or more of marker position information, marker direction information,
and information about a distance from the welding base material to the second camera unit;
receive, from one or more of the second camera unit and a second sensor unit, a result of detecting information regarding a welding situation comprising one or more of a welding location, a welding temperature, a welding direction, a welding inclination, a welding speed, and a distance between the welding base material and the welding rod;
generate welding guide information comprising one or more of an operation instruction, an operation change, and an operation stoppage, on the basis of the marker-related information and the information regarding the welding situation, and
control movement of the welding body and an operation of the welding rod in correspondence to the welding guide information.
